(19) Europäisches Patentamt
European Patent Office
Office européen des brevets

(11) **EP 4 170 281 B1**

(12) **EUROPEAN PATENT SPECIFICATION**

(45) Date of publication and mention
of the grant of the patent:
**06.11.2024  Bulletin 2024/45**

(21) Application number: **20941958.9**

(22) Date of filing: **22.06.2020**

(51) International Patent Classification (IPC):
*G01B 11/16* *(2006.01)*     *G01D 5/353* *(2006.01)*
*G01L 1/24* *(2006.01)*

(52) Cooperative Patent Classification (CPC):
**G01D 5/35361; G01B 11/161; G01L 1/242;**
**G01M 11/3118; G01M 11/3172**

(86) International application number:
**PCT/JP2020/024332**

(87) International publication number:
**WO 2021/260757 (30.12.2021 Gazette 2021/52)**

(54) **DISTORTION CHANGE MEASURING DEVICE AND DISTORTION CHANGE MEASURING METHOD**

VORRICHTUNG ZUR MESSUNG VON VERZERRUNGSÄNDERUNGEN UND VERFAHREN ZUR MESSUNG VON VERZERRUNGSÄNDERUNGEN

DISPOSITIF DE MESURE DE VARIATION DE DISTORSION ET PROCÉDÉ DE MESURE DE VARIATION DE DISTORSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.04.2023  Bulletin 2023/17**

(73) Proprietor: **Nippon Telegraph And Telephone Corporation**
**Chiyoda-ku**
**Tokyo 100-8116 (JP)**

(72) Inventors:
• **WAKISAKA, Yoshifumi**
  **Musashino-shi, Tokyo 180-8585 (JP)**
• **ONO, Shingo**
  **Musashino-shi, Tokyo 180-8585 (JP)**
• **IIDA, Daisuke**
  **Musashino-shi, Tokyo 180-8585 (JP)**
• **OSHIDA, Hiroyuki**
  **Musashino-shi, Tokyo 180-8585 (JP)**

(74) Representative: **v. Bezold & Partner Patentanwälte - PartG mbB**
**Ridlerstraße 57**
**80339 München (DE)**

(56) References cited:
**DE-A1- 102018 105 905     JP-A- 2009 042 005**
**JP-A- 2011 232 138     JP-A- 2016 142 618**
**US-A- 5 307 140     US-A1- 2011 228 255**
**US-A1- 2016 258 743**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present disclosure relates to an apparatus and a method for measuring a change in strain of a branched optical fiber.

Background Art

Methods for measuring a strain of an optical fiber resulting from a vibration pattern or the like along a longitudinal direction of the optical fiber include an optical time domain reflectometry (OTDR) method and an optical frequency domain reflectometry (OFDR) method (see, for example, NPL 1). In the OTDR method, pulsed test light is incident on a measurement target optical fiber from an incident end, a phase of Rayleigh scattered light backscattered from each point is measured, and thus, it is possible to quantitatively measure, from the phase change, a strain applied to the optical fiber, in a distributed manner (see, for example, NPL 2). In the OTDR method, an incident pulse is incident on the measurement target optical fiber at a certain time, scattered light completely returns to the incident end, the next incident pulse is then immediately incident on the measurement target optical fiber, and a strain can be measured at another time, so that it is possible to measure a strain at a high sampling rate.

In the OFDR method, frequency-swept continuous light is incident on a measurement target optical fiber from an incident end, and a complex amplitude of backscattered Rayleigh scattered light is acquired. A power spectrum of Rayleigh scattered light is then acquired at each point by using a short-time Fourier transform, and thus, it is possible to quantitatively measure, from an amount of spectral shift, a strain applied to the optical fiber, in a distributed manner (see, for example, NPLS 3 and 4).

Furthermore, a method of measuring a quasi-static strain and a low-frequency vibration pattern by a frequency scanning OTDR method has also been proposed (see, for example, NPLS 5 and 6). In this method, pulsed light is incident on a measurement target optical fiber while scanning an optical frequency, and an intensity of scattered light obtained by Rayleigh scattering is measured. In order to achieve a targeted sensitivity and the like in detection of a vibration pattern, a sufficient optical frequency range is scanned with a sufficient fineness to measure a power spectrum of Rayleigh scattered light, and similarly to the case of the OFDR method, information of a strain and the like is quantitatively measured in a distributed manner from the spectral shift.

However, the OTDR method, the OFDR method, and the frequency scanning OTDR method, all of which are used under a condition that a measurement target optical fiber is not branched by an optical coupler, regardless of the specific implementation methods. If the OTDR method, the OFDR method, or the frequency scanning OTDR method is used as is in a state where a measurement target optical fiber is branched by an optical coupler, scattered light beams scattered from each optical fiber after the optical coupler overlap with one another, and thus, it is not possible to measure the strain of each optical fiber after the optical coupler.

On the other hand, PTL 1 proposes a method allowing for measurement of a distribution of a vibration pattern. PTL 1 focuses on measuring a fluctuation of an optical loss of an optical fiber after a branched part, and using the proposed method of PTL 1 as is, it is also possible to measure a change in strain due to a vibration pattern or the like.

In the method proposed in PTL 1, a configuration is employed in which a reflection element that reflects light of a wavelength of test light is provided at the end of each branched optical fiber, and a signal obtained by adding a signal of normal scattered light detectable without the reflection element (hereinafter, referred to as a normal signal) and a signal detected, after the test light is reflected by the reflection element, when backscattered light that is generated in accordance with the propagation of the reflected test light that returning in the direction of an incident end and propagates in the direction of the reflection element is further reflected by the reflection element and propagates in the direction of the incident end (hereinafter, referred to as a ghost signal) is detected as an overall signal (hereinafter, referred to as a total signal). Supposing that an integer N denotes the number of branches of the branched optical fibers, numbers #1 to #N are assigned to the branched optical fibers, and L#n denotes a distance from an incident end to the reflection element of a branched optical fiber #n, a ghost signal scattered at a distance z from the incident end of the branched optical fiber #n can be apparently regarded as a normal signal scattered at a distance 2L#n - z from the incident end. Thus, when a power spectrum of scattered light of the total signal at each point is calculated in much the same way as a procedure for determining the power spectrum of scattered light of only a normal signal at each point, the calculated power spectrum of scattered light at the distance z from the incident end is identical to the calculated power spectrum of scattered light at an apparent distance 2L#n - z from the incident end, under the condition that no vibration pattern or the like is applied to the optical fiber during propagation of the test light, and a state of the spacing or the like between scatterers does not change. In particular, when distances L#n from the incident ends to the reflection elements of branched optical fibers are different from each other, the apparent distances 2L#n - z are also different from each other. Thus, if a shift amount is calculated so that a cross-correlation value is maximum for waveforms obtained by shifting, in a frequency axis direction, the power spectrum of scattered light at the apparent distance 2L#n - z from the incident end measured at a monitoring time, with respect to the power spectrum of scattered light at the distance z from the incident end measured at a reference time, it is possible to measure a fluctuation of the optical loss from the cross-correlation value for the shift amount. Furthermore, the shift amount is proportional to a change in temperature and strain state, and thus, it is also possible to quantitatively measure changes in temperature and strain state at the monitoring time with respect to the reference time. Consequently, it is possible to measure a vibration pattern, which is a dynamic strain change.

Citation List

Patent Literature

PTL 1: JP 2016-142618 A, Shingo Ohno, Tatsuya Okamoto, Kunihiro Toge, Tetsuya Manabe, "Method and apparatus for testing long distance optical fiber having branch"
DE102018105905A1 relates to correctly determining the change of a physical parameter.

Non Patent Literature

NPL 1: Ali. Masoudi, T. P. Newson, "Contributed Review: Distributed optical fibre dynamic strain sensing," Review of Scientific Instruments 87, 011501 (2016)
NPL 2: Z. Pan, K. Liang, Q. Ye, H. Cai, R. Qu, and Z. Fang, "Phase-sensitive OTDR system based on digital coherent detection, in Optical Sensors and Biophotonics, J. Popp, D. Matthews, J. Tian, and C. Yang, eds., Vol. 8311 of Proceedings of SPIE (Optical Society of America, 2011), paper 83110S.
NPL 3: Da-Peng Zhou, Zengguang Qin, Wenhai Li, Liang Chen, and Xiaoyi Bao, "Distributed vibration sensing with time-resolved optical frequency-domain reflectometry," Opt. Express 20, 13138-13145 (2012)
NPL 4: Da-Peng Zhou, Liang Chen, and Xiaoyi Bao, "Distributed dynamic strain measurement using optical frequency-domain reflectometry," Appl. Opt. 55, 6735-6739 (2016)
NPL 5: Yahei Koyamada, Mutsumi Imahama, Kenya Kubota, and Kazuo Hogari, "Fiber-Optic Distributed Strain and Temperature Sensing With Very High Measurand Resolution Over Long Range Using Coherent OTDR," J. Lightwave Technol. 27, 1142-1146 (2009)
NPL 6: Sascha Liehr, Sven Munzenberger, and Katerina Krebber, "Wavelength-scanning coherent OTDR for dynamic high strain resolution sensing," Opt. Express 26, 10573-10588 (2018)
NPL 7: Lihi Shiloh and Avishay Eyal, "Distributed acoustic and vibration sensing via optical fractional Fourier transform reflectometry," Opt. Express 23, 4296-4306 (2015)

Summary of the Invention

Technical Problem

In the method of PTL 1, in order to measure a power spectrum of Rayleigh scattered light, the OFDR method and the frequency scanning OTDR method are used as a base technology. However, as described in NPL 7, in a strain measurement using the OFDR method, it is difficult to perform a desired frequency sweep at high speed.
Furthermore, in order to ensure excellent spatial resolution in the OFDR, it is necessary to sample a vibration pattern by repeating the following procedure. A beat signal of scattered light and reference light is measured during a sufficiently longer time than a required time required from the moment the frequency-swept test light is incident until the scattered light generated, in accordance with the propagation of the test light, at a position farthest from the incident end including the apparent point reaches the incident end after the test light propagates, the next frequency-swept light beam is then incident, and measurement is performed during a similarly long time. Consequently, the sampling rate during the strain measurement is limited, and it is generally difficult to achieve a sampling rate of an order of kilohertz or higher.
Furthermore, in the frequency scanning OTDR method, as described in NPL 6, it is necessary to finely design an optical frequency scan with a very small scale in order to measure a spectrum. A configuration is used where the scanned pulses are sequentially incident and measured, for example, a first pulse is incident from an incident end and after scattered light of the first pulse returns, a second pulse is incident. Thus, it is necessary to set a slower sampling rate than that in a strain measurement technique using an ordinary OTDR method, which is a major drawback, especially in the measurement of long-distance fibers.

An object of the present disclosure is to measure, at a high sampling rate, a distribution of a strain change applied to each core after being branched.

Means for Solving the Problem

A strain change measurement apparatus according to the present disclosure inputs, at a reference time, first chirped pulsed light having a chirp having a frequency changing linearly with time to a measurement target optical fiber branched by a coupler to acquire a signal of first scattered light regarding the first chirped pulsed light, inputs, at individual monitoring times, second chirped pulsed light having a chirp obtained by time axial inversion with respect to the first chirped pulsed light to the measurement target optical fiber to acquire a signal of second scattered light regarding the second chirped pulsed light, and
determines a shift amount allowing for maximization of a correlation between a waveform obtained by inverting the signal of the first scattered light around the time axis and further shifting and a waveform of the signal of the second scattered light, and uses the shift amount to calculate a change in strain amount in the measurement target optical fiber from the reference time to each of the monitoring times.

A strain change measurement method according to the present disclosure includes by a strain change measurement apparatus, inputting first chirped pulsed light having a chirp having a frequency changing linearly with time to a measurement target optical fiber branched by a coupler to acquire a signal of first scattered light regarding the first chirped pulsed light,

by the strain change measurement apparatus, inputting second chirped pulsed light having a chirp obtained by time axial inversion with respect to the first chirped pulsed light to the measurement target optical fiber to acquire a signal of second scattered light regarding the second chirped pulsed light, and
by the strain change measurement apparatus, determining a shift amount allowing for maximization of a correlation between a waveform obtained by inverting the signal of the first scattered light around the time axis and further shifting and a waveform of the signal of the second scattered light, and using the shift amount to calculate a change in a strain amount in the measurement target optical fiber.

Effects of the Invention

According to the present disclosure, it is possible to measure, at a high sampling rate, a distribution of a strain change applied to each core after being branched.

Brief Description of Drawings

Fig. 1 illustrates an example of a system configuration according to the present disclosure.
Fig. 2 illustrates an outline of a strain change measurement method according to the present disclosure.
Fig. 3 shows a state of a chirp at a reference time.
Fig. 4 shows a state of a chirp at a monitoring time.
Fig. 5 illustrates an example of an OTDR waveform under the condition that an incident pulse S0 is scattered by a scatterer S4 in a target section S2 before reaching a reflection end S3 of a measurement target optical fiber S1.
Fig. 6 illustrates an example of an OTDR waveform under the condition that an incident pulse S7, having a chirp obtained by inversion with respect to a pulse 1, reaches the reflection end S3 of the measurement target optical fiber S1, is reflected, and then, is scattered by the scatterer S4 in the target section S2.
Fig. 7 illustrates an example of a system configuration using a coherent wave detection configuration.

Description of Embodiments

Hereinafter, embodiments of the present disclosure will be described in detail with reference to the drawings. Furthermore, the present disclosure is not limited to the embodiments described below. These examples of the embodiments are merely examples, and the present disclosure can be implemented in forms in which various modifications and improvements are added based on knowledge of those skilled in the art. Constituent elements with the same reference signs in the specification and the drawings are assumed to be the same constituent elements.

Outline of the Invention

In a configuration in which when a measurement target optical fiber is branched by an optical coupler, and when a reflection element that reflects light of a wavelength of test light is provided at an end of each branched optical fiber, there is proposed a technology for measuring, at a high sampling rate, a strain change generated in each branched optical fiber.

In the proposed method, pulsed light is incident based on the OTDR method, but the proposed method is characterized in differently using, as incident pulsed light, two types of optical pulses having chirps inverted to each other.

Specifically, two types of optical pulses are used as incident light. The two types of optical pulses include an optical pulse having a chirp with an instantaneous frequency increasing linearly with time and an optical pulse having a chirp in which an optical frequency range to be chirped is the same as that in the above-described pulse, but a positive/negative sign of a slope of the chirp is inversed. One of the two types of optical pulses is incident at a certain time A to measure an OTDR waveform, and the other of the two types of optical pulses is incident at a certain time B to acquire an OTDR waveform. A waveform obtained by inverting, with respect to the time axis, the OTDR waveform acquired at the time A is further shifted with respect to the time axis so that a correlation between the waveform obtained by inverting, with respect to the time axis, the OTDR waveform acquired at the time A and the OTDR waveform acquired at the time B is maximized in a predetermined section having an expansion of approximately the spatial resolution, and a change in strain amount applied to the predetermined section from the time A to the time B is calculated from the shift amount.

Using the specific procedure described above, a relationship between a measurement distance and a sampling rate in the OTDR method is satisfied, and thus, a strain change can be measured at a high sampling rate.

Effects of the Invention

In a configuration in which an element (a reflection filter or a reflection mirror) that reflects test light, regardless of whether the element has been already or is newly provided, is provided after an optical coupler, it is possible to measure, at a high sampling rate, a distribution of a vibration pattern applied to each core after being branched by the coupler. For example, in a case where an optical fiber is widely spread to construct a sensing network, when the network is constructed without branching the optical fiber, if a failure such as disconnection occurs somewhere in the network, sensing is not possible any more at all points after the disconnected point. However, with a network having a branched configuration using a coupler, it is possible to obtain redundant functions, and thus, a method of measuring a strain change is provided in the sensing network having such a branched configuration.

In addition, incident ends of the plurality of sensing networks covering different regions are connected to a plurality of outputs of an optical coupler having one input and the plurality of outputs, and an output end of one optical measurement device is connected to the one input of the optical coupler, and thus, it is possible to provide a procedure for simultaneously measuring a distribution of a vibration pattern in different regions by the one optical measurement device.

A communication network using an optical fiber is also used for sensing as another example. In this network, in an access network topology connecting from a communication station building to a home of a service user, a passive optical network (PON) system using a branched configuration using an optical coupler, which is an optical passive element, is mainly employed because the coupler itself is inexpensive, does not require power supply, and small, and the optical fiber before the coupler can be commonly used. In the PON system, a reflection filter that cuts wavelengths other than communication light is typically installed in front of each service user ONU. Thus, the present invention can also be employed for a method for measuring, at a high sampling rate, a distribution of a vibration pattern of each optical fiber after being branched by the optical coupler in such a PON system.

First Exemplary Embodiment

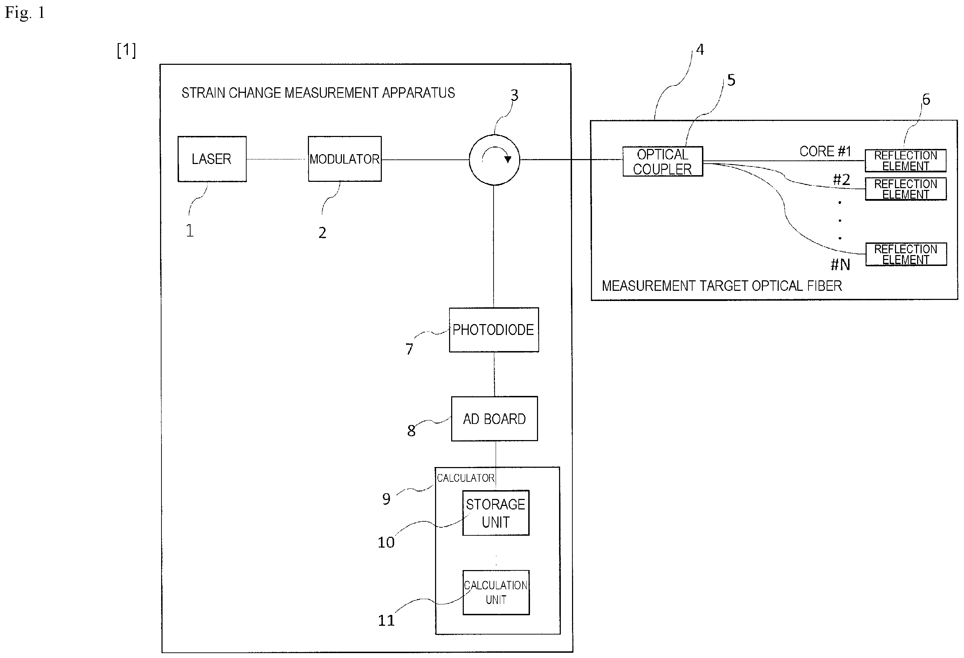

A system configuration employed in the present exemplary embodiment is illustrated in Fig. 1. A strain change measurement apparatus according to the present embodiment includes a laser 1, a modulator 2, a circulator 3, a photodiode 7, an AD board 8, and a calculator 9. The strain change measurement apparatus is connected to a measurement target optical fiber 4.

Continuous light is emitted from the laser 1, the continuous light is chirped by the modulator 2 to be shaped into pulsed light, and the obtained pulsed light is incident on the measurement target optical fiber 4 via the circulator 3. The measurement target optical fiber 4 is branched by an optical coupler 5 into N branched optical fibers having a core number #1 to #N. A reflection element 6 is installed near a far end of each core and reflects the chirped pulsed light. Thereat, it is presupposed that a distance from an incident end to the reflection element 6 of each branched optical fiber is designed so as to satisfy a condition that the distance has a value larger than a spatial resolution determined from a pulse width of the pulsed light. Alternatively, in measuring existing branched optical fibers, a strain change is measured in a branched optical fiber satisfying the above-described condition. Backscattered light generated, while the chirped pulsed light propagates through the measurement target optical fiber 4, is detected by the photodiode 7 via the circulator 3. A signal of the scattered light photoelectrically converted by the photodiode 7 is digitized by the AD board 8 and transmitted to the calculator 9. The signal transmitted to the calculator 9 is temporarily saved in a storage unit 10. Signals obtained by the above procedure at different times and saved in the storage unit 10 are used by a calculation unit 11 to calculate a temporal change in strain amount applied to each core of the measurement target optical fiber 4.

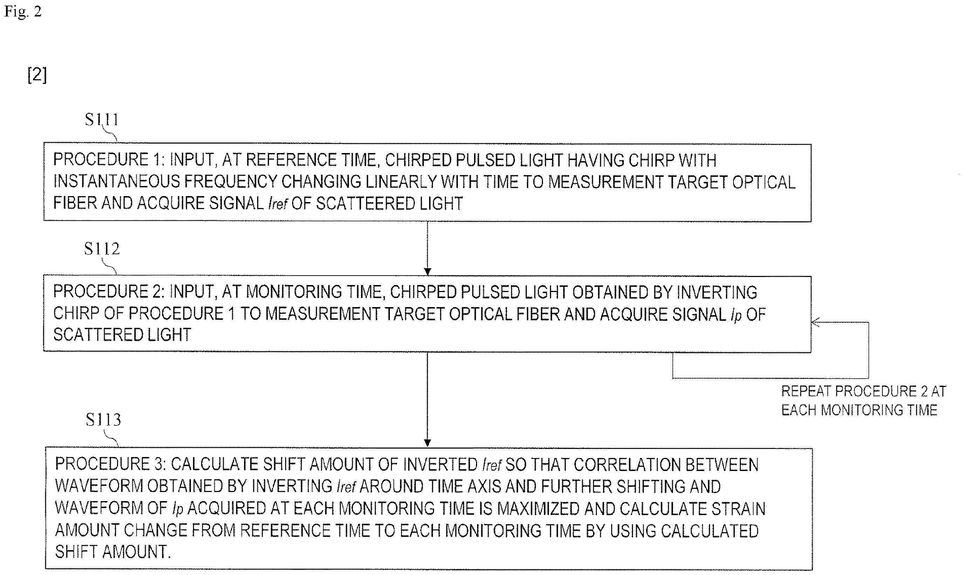

Specifically, as illustrated in Fig. 2, the proposed technique includes procedures S111 to S113.

In the procedure S 111, at a reference time, chirped pulsed light having a chirp with an instantaneous frequency changing linearly with time is incident on the measurement target optical fiber, a signal $I_{ref}$ of scattered light is acquired, and the signal $I_{ref}$ is saved in the storage unit 10.

In the procedure S112, at a monitoring time, chirped pulsed light having a chirp inverted with respect to that in procedure S111 is incident on the measurement target optical fiber, a signal $I_p$ of scattered light is acquired, and the signal $I_p$ is saved in the storage unit 10. The procedure S112 is repeated at a plurality of monitoring times at which tracking of a strain change is desired.

In the procedure S 113, the calculation unit 11 calculates a shift amount of an inverted $I_{ref}$ so that a correlation between a waveform obtained by inverting the $I_{ref}$ acquired at the reference time around a time axis and further shifting and a waveform of the $I_p$ acquired at each monitoring time is maximized, and a change in strain amount from the reference time to each monitoring time is calculated by using the calculated shift amount. Fig. 2 summarizes these procedures.

The detailed principles are described below.

In the procedure S111, chirped pulsed light given by a time waveform of Equation (1) is created at an incident end at a reference time $T = T_{ref}$, and is incident on the measurement target optical fiber 4.

[Math. 1]

$$e_{ref}(t) = \text{rect}\left(\frac{t}{\tau_p}\right) \exp\left(-j2\pi \frac{\delta v_p}{2\tau_p} t^2\right) \exp(j2\pi v_0 t)$$

Equation (1)

Equation (1) is written using a time reference t in which t = 0 is a timing at the beginning of the incident pulse at the incident end, and thus, the relationship $t = T - T_{ref}$ is satisfied. The function rect(x) is a function that is 1 for 0 < x < 1 and is 0 for 0 > x and 1 < x. The symbol j denotes an imaginary unit. The symbol $\tau_p$ denotes a width of the optical pulse. The instantaneous frequency is designed so as to change linearly from $v_0$ to $(v_0 - \delta v_p)$ as t changes from 0 to $\tau_p$.

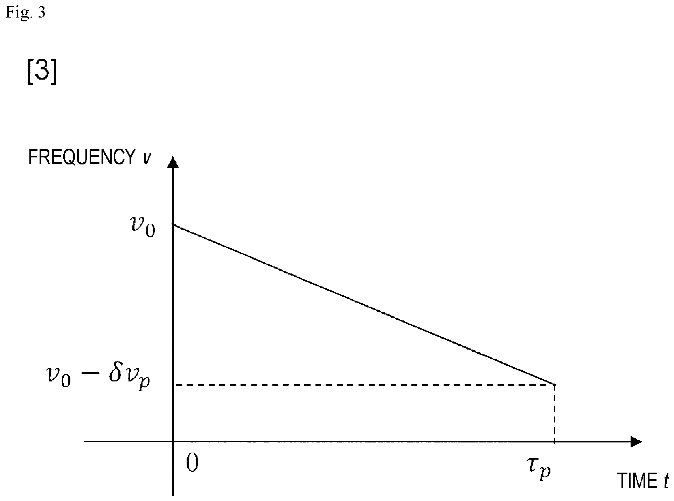

Fig. 3 shows a state of a chirp. Equation (1) expresses a temporal change in complex amplitude of an electric field of the incident pulse at the incident end. Thus, supposing that z is a distance from the incident end, a temporal change in complex amplitude of an electric field at given position of the incident pulse propagating in a positive direction of z is given by Equation (E0). Note that, in Equation (E0), a superposition with test light traveling in a negative direction of z after being reflected by a reflection element and a superposition with scattered light are not taken into consideration. The symbol c denotes a speed of light in the optical fiber.

[Math. E0]

$$e_{ref}(t, z) = \text{rect}\left(\frac{\left(t - \frac{z}{c}\right)}{\tau_p}\right) \exp\left(-j2\pi \frac{\delta v_p}{2\tau_p}\left(t - \frac{z}{c}\right)^2\right) \exp\left(j2\pi v_0 \left(t - \frac{z}{c}\right)\right)$$

Equation (E0)

In the following, a complex amplitude at the incident end when scattered light generated during propagation of the created test light through the branched optical fiber #n (n = 1, 2, ..., N) travels in the negative direction of z and propagates to the position of the incident end will be calculated. The target of the calculation is a complex amplitude of light scattered by a scatterer in a section where the distance z from the incident end satisfies $D < z < (D + \tau_p C/2)$. A time waveform of the scattered light that is backscattered and returns to the incident end is given by Equation (2)

[Math. 2]

$$e_{\#n}(D,t) = \sum_i a_i \mathrm{rect}\left(\frac{\left(t - \frac{2(D+d_i)}{c}\right)}{\tau_p}\right) \exp\left(-j2\pi\frac{\delta v_p}{2\tau_p}\left(t\right.\right.$$

$$\left.\left.- \frac{2(D+d_i)}{c}\right)^2\right) \exp\left(j2\pi v_0\left(t - \frac{2(D+d_i)}{c}\right)\right)$$

$$= \left[\mathrm{rect}\left(\frac{t}{\tau_p}\right)\exp\left(-j2\pi\frac{\delta v_p}{2\tau_p}t^2\right)\exp(j2\pi v_0 t)\right] * \left[\sum_i a_i \cdot \delta\left[t - 2\left(\frac{D+d_i}{c}\right)\right]\right]$$

$$= \left[\left[\mathrm{rect}\left(\frac{t}{\tau_p}\right)\exp\left(-j2\pi\frac{\delta v_p}{2\tau_p}t^2\right)\exp(j2\pi v_0 t)\right] * \left[\sum_i a_i \cdot \delta\left[t - 2\left(\frac{d_i}{c}\right)\right]\right]\right]$$

$$* \delta\left(t - \frac{2D}{c}\right)$$

$$= \left[\left[\mathrm{rect}\left(\frac{t}{\tau_p}\right)\exp\left(-j2\pi\frac{\delta v_p}{2\tau_p}t^2\right)\exp(j2\pi v_0 t)\right] * \left[s_{\#n}(D,t)\exp[j\theta_{\#n}(D,t)]\right]\right]$$

$$* \delta\left(t - \frac{2D}{c}\right)$$

Equation (2)

where a position of a scatterer i is at a distance D + di from the incident end, and ai is an area of a scattering cross section.

At a rightmost side of Equation (2), $s_{\#n}$(D, t) denotes an absolute value of a term depending on each branched optical fiber #n and $\theta_{\#n}$(D, t) denotes a declination angle. Equation (2) includes only light scattered from the scatterer in the section where the distance z from the incident end satisfies D < z < (D + $\tau_p$C/2). However, in reality, light scattered from a scatterer in another section also exists, and thus, a sum of the scattered light beams from all scatterers is a continuous waveform in a horizontal time axis direction, which is similar to a normal OTDR waveform using no chirp pulse.

Note that, in the following, the principle of the proposed technique will be described continuously with focusing on the scattering by the scatterer in the section where D < z < (D + $\tau_p$C/2) is satisfied. However, the essence of the conclusions that can be obtained is the same as that in a general discussion extending over all sections. Note that, in Equation (2), * is employed for a symbol representing a convolution integral. In the following mathematical notation, * represents only a convolution integral. A definition of the convolution integral of f(t) and g(t), which are functions of a time t, is defined by Equation (E1).

[Math. E1]

$$(f * g)(t) = \int_{-\infty}^{+\infty} f(s)g(t - s)ds$$

Equation (E1)

Furthermore, the notation method of (E2) is used as the notation method of the convolution integral. In Equation (2), the notation method on the left side of Equation (E2) is used.

[Math. E2]

$$f(t) * g(t) = \left(f(t) * g(t)\right)(t) = (f * g)(t)$$

Equation (E2)

The signal $I_{ref}$ output after the scattered light described in Equation (2) above is received by a photodiode is actually a sum of scattered light beams from each branched optical fiber, and is given by Equation (3)

[Math. 3]

$$I_{ref}(D,t) = A \left| \sum_n e_{\#n}(D,t) \right|^2 * h(t)$$

$$= A \left( \sum_n |e_{\#n}(D,t)|^2 + \sum_n \sum_{m(\neq n)} e_{\#n}(D,t)\overline{e_{\#m}(D,t)} \right) * h(t)$$

<div align="right">Equation (3)</div>

where h(t) is an impulse response of the photodiode and A is a proportionality coefficient independent of t.

The essence of the following explanation of the principles does not change regardless of whether a propagation time required by the scattered light at the incident end to propagate to the photodiode 7 via the circulator is considered or is not considered in Equation (3), and thus, the required propagation time is assumed to be zero. The required propagation time will also be ignored in the following discussion. Furthermore, the essence of the following explanation of the principles does not change regardless of whether a process time required for a process in which a photoelectrically converted electric signal is digitized in the AD board 8 and saved in the storage unit 10 of the calculator 9, is considered or is not considered, and thus, the required process time is assumed to be zero. The required process time will also be ignored in the following discussion. Moreover, it is assumed that a signal deterioration occurring in the process in which the photoelectrically converted electric signal is digitized in the AD board 8 and saved in the storage unit 10 of the calculator 9, can be ignored, for example, by selecting the AD board 8 that sufficiently satisfies conditions for a time resolution, a voltage resolution, and a frequency band. Thus, it is assumed that Equation (3) may be used as is as the waveform saved in the storage unit 10 of the calculator 9 in the procedure S111.

In the procedure S112, chirped pulsed light given by a time waveform of Equation (4) is created at the incident end at a monitoring time T = $T_k$, and is incident on the measurement target optical fiber 4. Note that the monitoring time needs to be selected so that the scattered light at the monitoring time does not overlap with scattered light at the reference time or scattered light at another monitoring time when returning to the incident end.
[Math. 4]

$$E_p = \left[ \mathrm{rect}\left( -\frac{t}{\tau_p} \right) \exp\left( j2\pi \frac{\delta v_p}{2\tau_p} t^2 \right) \exp(j2\pi v_0 t) \right] * \delta\left( t - \tau_p \right)$$

<div align="right">Equation (4)</div>

Equation (4) is described using a time reference in which t = 0 is the timing at the beginning of the incident pulse at the incident end and Equation (4) has a design in which the instantaneous frequency changes linearly from ($v_0$ - $\delta v_p$) to $v_0$ while t changes from 0 to $\tau_p$. The convolution integral with the delta function is employed to shift the time axis.

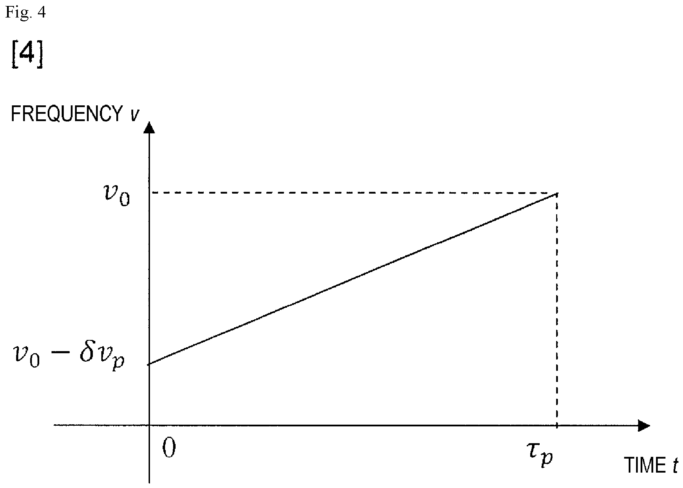

Fig. 4 shows a state of a chirp. A chirp has a temporally inverted property with respect to a chirp pulse incident at the reference time. Equation (4) expresses a temporal change in complex amplitude of the electric field of incident light at the incident end. Note that the time reference t in Equation (4) is a changed time reference so as to satisfy t = T - $T_k$ and is different from the time reference t satisfying t = T - $T_{ref}$ used in Equations (1) to (3). Changing the time references t each time when an incident pulse is incident makes OTDR waveforms, at the reference time and each of the monitoring times with a timing when the incident pulse is incident on the incident end being an origin point, treated individually so that the following explanation of the principles can proceed.
The complex amplitude of light obtained when the test light given by Equation (4) is scattered from the branched optical fiber #n (n = 1, 2, ..., N) will be calculated. The target of the calculation is the complex amplitude of light obtained under the condition that the test light is reflected by the reflection element 6 of the branched optical fiber #n (n = 1, 2, ..., N), the reflected light is backscattered by the scatterer in the section where the distance z from the incident end satisfies D < z < (D + $\tau_p$C/2), and the backscattered light is reflected by the reflection element 6 and returns to the incident end. $L_{\#n}$ is a distance from the incident end to the reflection element 6.
Firstly, for the sake of simplicity, before considering a situation where a distribution of the scatterers is changed by a vibration pattern applied to the measurement target optical fiber 4 for the reference time, a stationary situation is considered where no vibration pattern is applied to the measurement target optical fiber 4 for the reference time. When no vibration pattern is applied, a time waveform of the scattered light that is backscattered and returns to the incident end is given by Equation (5).
[Math. 5]

$$E_{\#n}(D,t) = \left[\left[\text{rect}\left(-\frac{t}{\tau_p}\right)\exp\left(j2\pi\frac{\delta v_p}{2\tau_p}t^2\right)\exp(j2\pi v_0 t)\right] * \delta\left(t - \tau_p\right)\right]$$

$$* \left[\sum_i a_i \cdot \delta\left[t - 2\left(\frac{D + 2(L_{\#n} - D) - d_i}{c}\right)\right]\right]$$

$$= \left[\text{rect}\left(-\frac{t}{\tau_p}\right)\exp\left(j2\pi\frac{\delta v_p}{2\tau_p}t^2\right)\exp(j2\pi v_0 t)\right] * \left[\sum_i a_i \cdot \delta\left[t + 2\left(\frac{d_i}{c}\right)\right]\right]$$

$$* \delta\left[t - \tau_p - 2\left(\frac{2L_{\#n} - D}{c}\right)\right]$$

Equation (5)

Note that, similarly to Equation (2), Equation (5) only includes light scattered from the scatterer in the section where the distance z from the incident end satisfies D < z < (D + $\tau_p$C/2). After calculating a complex conjugate of Equation (5), the time is inverted to obtain the relational expression of Equation (6).
[Math. 6]

$$\overline{E_{\#n}(D,-t)} = \left[\text{rect}\left(\frac{t}{\tau_p}\right)\exp\left(-j2\pi\frac{\delta v_p}{2\tau_p}t^2\right)\exp(j2\pi v_0 t)\right] * \left[\sum_i a_i \cdot \delta\left[t - 2\left(\frac{d_i}{c}\right)\right]\right]$$

$$* \delta\left[t + \tau_p + 2\left(\frac{2L_{\#n} - D}{c}\right)\right]$$

$$= e_{\#n}(D,t) * \delta\left(t + \tau_p + \frac{4L_{\#n}}{c}\right)$$

Equation (6)

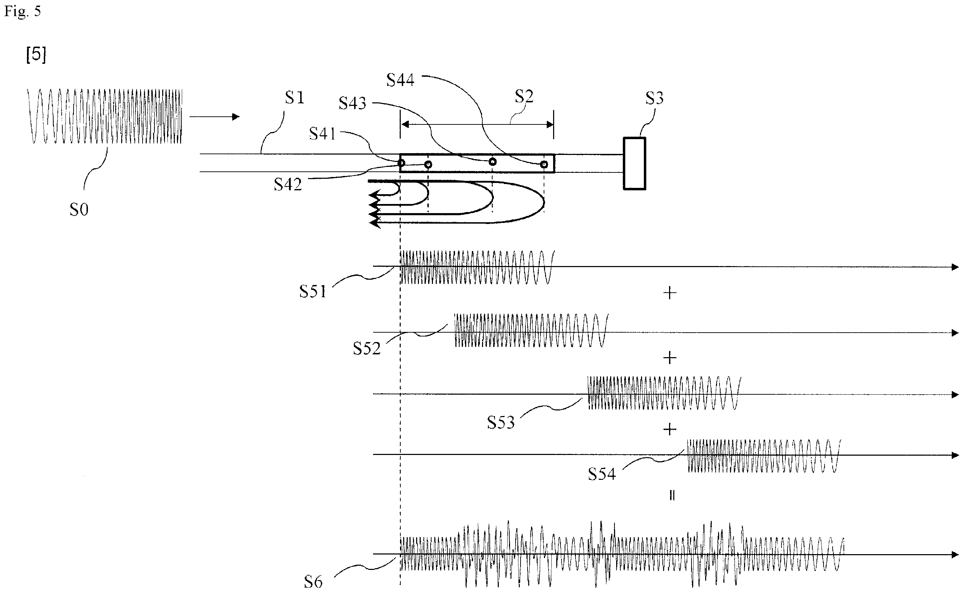

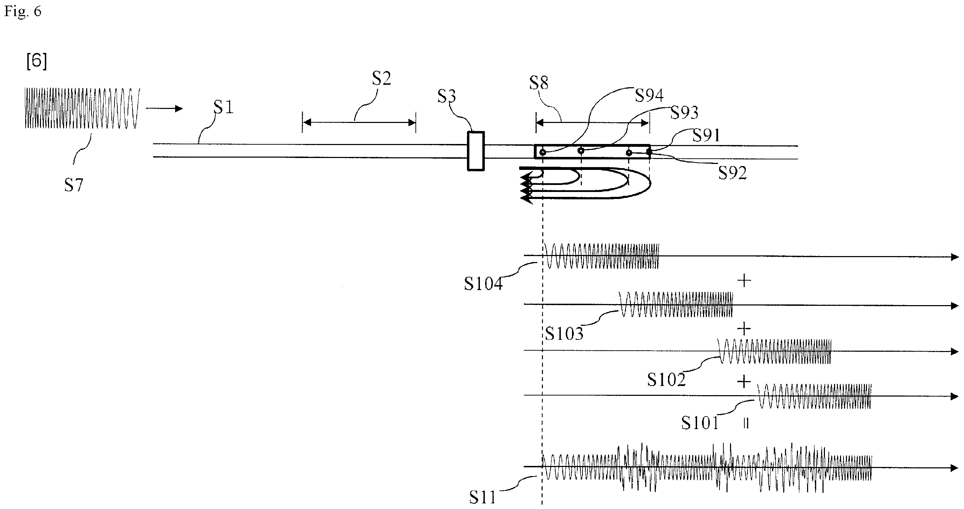

From Equation (6), it can be seen that the waveform on the left side of Equation (6) is a waveform obtained by temporally shifting the waveform given by Equation (2) by - $\tau_p$ - $4L_{\#n}$/C. That is, the shapes of the OTDR waveform of Equation (5) and the OTDR waveform of Equation (2) have a temporally inverted relationship. This can be qualitatively understood from Figs. 5 and 6.
As illustrated in Fig. 5, when a chirp pulse S0 is incident on the measurement target optical fiber S1, scattered light beams scattered from scatterers S41, S42, S43, and S44 in a section S2 before being reflected by a reflection element S3 result in S51, S52, S53, and S54, using a scattering timing by the frontmost scatterer S41 as a reference. Thus, S6 is a waveform obtained by superimposing the scattered light beams.
On the other hand, as illustrated in Fig. 6, in making S7 having a chirp inverted with respect to S0 incident on the measurement target optical fiber S1, S7 is firstly reflected by the reflection element S3, and then, after being backscattered by the scatterer in the section S2 and reflected by the reflection element S3, the scattered light returning in the direction of the incident end is identical to the following scattered light, given that the reflectance of the reflection element is 1. The following scattered light is scattered light in which the optical pulse S7 is not reflected by the reflection element S3 and returns in the direction of the incident end after being backscattered by scatterers S91, S92, S93, and S94 in a fiber section S8 having a mirror image positional relationship with the scatterers S41, S42, S43, and S44 in the fiber section 2 with respect to a position of the reflection element S3 and being at a position apparently farther away from the incident end than the reflection element S3. Consequently, after the incident pulse S7 reaches the reflection end S3 and is reflected by the reflection end S3, a waveform of scattered light generated when the reflected light is scattered by the scatterers S41 to S44 in the target section S2 is apparently identical to a waveform of scattered light S11 obtained by the superposition of S101, S102, S103, and S104 being scattered light scattered from each of the scatterers S91, S92, S93, and S94 in the section S8.
It can be seen that the scattered light S6 illustrated in Fig. 5 and the scattered light S11 illustrated in Fig. 6 have shapes inverted with respect to time. In reality, the chirp pulse includes a very large number of scatterers, the distribution of the scatterers also extends at an area before and after the section S2, and a scattering coefficient differs for each scatterer, but these do not change the characteristic that an inverted shape is obtained by making an inverted chirp incident.
However, a value of $L_{\#n}$ is different for each branched optical fiber, and thus, timings when the test light is reflected by the reflection element of each branched optical fiber, the reflected light is backscattered by the scatterer in the section where the distance z from the incident end satisfies $D < z < (D + \tau_p C/2)$, and the backscattered light is reflected by the reflection element and returns to the incident end, are different in each branched optical fiber. A signal $I_{p, \#X}$ output by the photodiode at a timing when the scattered light from a certain branched optical fiber #X returns to the incident end is given by Equation (7).

[Math. 7]

$$I_{p,\#X}(D, t) = A \left| \sum_n E_{\#n}[2(L_{\#n} - L_{\#X}) + D, t] \right|^2 * h(t)$$

$$= A \left[ \sum_n |E_{\#n}[2(L_{\#n} - L_{\#X}) + D, t]|^2 \right.$$

$$\left. + \sum_n \sum_{m(\neq n)} E_{\#n}[2(L_{\#n} - L_{\#X}) + D, t]\overline{E_{\#m}[2(L_{\#m} - L_{\#X}) + D, t]} \right] * h(t)$$

$$\text{Equation (7)}$$

Note that, here, the subscript #X is used to clarify a timing of which core is used. Hereinafter, if it is not necessary to clarify a timing of which core is used, $I_p$ is simply used to describe a received signal at a monitoring time. When $D_{\#n, \#x}$ is defined as in Equation (8), Equation (7) can be transformed into Equation (9) by using Equation (6).

[Math. 8]

$$D_{\#n,\#X} = 2(L_{\#n} - L_{\#X}) + D$$

$$\text{Equation (8)}$$

[Math. 9]

$$I_{p,\#X}(D, t) = A \left[ \sum_n |e_{\#n}[D_{\#n,\#X}, -t]|^2 * \delta\left(t - \tau_p - \frac{4L_{\#n}}{c}\right) \right.$$

$$+ \sum_n \sum_{m(\neq n)} \left[ e_{\#n}(D_{\#n,\#X}, -t) * \delta\left(t - \tau_p - \frac{4L_{\#n}}{c}\right) \right]$$

$$\left. \cdot \overline{\left[ e_{\#m}(D_{\#m,\#X}, -t) * \delta\left(t - \tau_p - \frac{4L_{\#m}}{c}\right) \right]} \right] * h(t)$$

$$\text{Equation (9)}$$

Next, a situation in which a vibration pattern is applied to the measurement target optical fiber 4 for the reference time and the distribution of the scatterers is changed will be discussed as a typical situation. It is assumed that, in a fiber core #n, a scatterer located in the vicinity of the distance D from the incident end at the reference time moves to the vicinity of a distance $D + \Delta D_{\#n}$ from the incident end by a sum of vibration patterns up to the front of the scatterer, a vibration pattern that is a dynamic strain $\varepsilon_{\#n}(D)$ is applied in the vicinity of the distance $D + \Delta D_{\#n}$ from the incident end uniformly on a scale larger than the length $\tau_p C/2$, and the distance changes from $L_{\#n}$ to $L_{\#n} + \Delta L_{\#n}$ by a sum of vibration patterns further applied to the whole length from the incident end to the reflection element 6.

At this time, a target of the calculation is a temporal change $E_{\#n}[D, t, \Delta D_{\#n}, \Delta L_{\#n}, \varepsilon_{\#n}(D)]$ in complex amplitude of an electric field of light obtained under the condition that the test light is reflected by the reflection element 6 of the branched optical fiber #n, the reflected light is then backscattered by a scatterer in a section where the distance z from the incident end satisfies $(D + \Delta D_{\#n}) < z < (D + \Delta D_{\#n} + \tau_p C/2)$, and the backscattered light is reflected by the reflection element 6 and returns to the incident end. $E_{\#n}[D, t, \Delta D_{\#n}, \Delta L_{\#n}, \varepsilon_{\#n}(D)]$ is a generalization of $E_{\#n}(D, t)$ given by Equation (5) given that $\Delta D_{\#n} = \Delta L_{\#n} = \varepsilon_{\#n}(D) = 0$ is satisfied.

$E_{\#n}[D, t, \Delta D_{\#n}, \Delta L_{\#n}, \varepsilon_{\#n}(D)]$ is a waveform obtained under the condition that $E_{\#n}(D, t)$ is shifted in a direction of a parameter t by the following two effects.

- Effect 1:
  An effect resulting from a change in timing at which the scattered light reaches the incident end, resulting from a change in propagation time of the test light and the scattered light due to a change $\Delta D_{\#n}$ and a change $\Delta L_{\#n}$
- Effect 2:
  An effect resulting from a change in scattered light waveform obtained as an interference pattern of scattered light beams scattered from each scatterer if a spacing between scatterers in the section is $(1 + \varepsilon_{\#n}(D))$ times

The magnitude of each effect is approximately evaluated below.

- Magnitude of Effect 1:
  Scattered light at an apparent distance 2L#n - D from the incident end is considered, and thus, a timing at which the scattered light reaches the incident end changes by $2(2\Delta L_{\#n} - \Delta D)/c$, considering a round trip of the light.
- Magnitude of Effect 2:
  A power spectrum of scattered light in the section is considered. According to a similar concept to that in the OFDR method, given that the spacing between the scatterers is $(1 + \varepsilon_{\#n}(D))$ times at the monitoring time, a power spectrum of scattered light $\sigma(D, \omega, \varepsilon_{\#n}(D))$ is given by Equation (10)

[Math. 10]

$$\sigma\big(D, \omega, \epsilon_{\#n}(D)\big) = \sigma\big(D, \big(1 + \epsilon_{\#n}(D)\big)\omega\big)$$

$$\text{Equation (10)}$$

where $\sigma(D, \omega)$ is the power spectrum of scattered light at the reference time before the vibration pattern is applied.
In the present invention, a chirp pulse is used, and a linear relationship exists between each frequency $\omega$ and a time t, and thus, it is possible to obtain the power spectrum of scattered light corresponding to the time waveform as in Equation (11).
[Math. 11]

$$\widetilde{\sigma}(D, t) = \sigma\left(D, 2\pi v_0 + 2\pi \frac{\delta v_p}{\tau_p} t\right)$$

$$\text{Equation (11)}$$

Using Equation (10) and Equation (11), the time waveform at the monitoring time is obtained by Expression (12).
[Math. 12]

$$\begin{aligned}
\widetilde{\sigma}\big(D, t, \epsilon_{\#n}(D)\big) &= \sigma\left(D, \big(1 + \epsilon_{\#n}(D)\big)\left(2\pi v_0 + 2\pi \frac{\delta v_p}{\tau_p} t\right)\right) \\
&= \sigma\left(D, 2\pi v_0\big(1 + \epsilon_{\#n}(D)\big)\left(1 + \frac{\delta v_p}{v_0 \tau_p} t\right)\right) \\
&\cong \sigma\left(D, 2\pi v_0\left(1 + \epsilon_{\#n}(D) + \frac{\delta v_p}{v_0 \tau_p} t\right)\right) \\
&= \sigma\left(D, 2\pi v_0 + 2\pi \frac{\delta v_p}{\tau_p}\left(t + \frac{v_0 \tau_p \epsilon_{\#n}(D)}{\delta v_p}\right)\right) = \widetilde{\sigma}(D, t) * \delta\left(t + \frac{v_0 \tau_p \epsilon_{\#n}(D)}{\delta v_p}\right)
\end{aligned}$$

$$\text{Expression (12)}$$

It is assumed that the product of minute terms can be ignored in a transformation at the rightmost side of Expression (12). This means that, by the effect of $\varepsilon_{\#n}(D)$, because the time waveforms in Equation (11) and Expression (12) correspond to the square of the amplitude of the electric field of the scattered light, the time waveform of the square of the amplitude is shifted by $v_0\tau_p\varepsilon_{\#n}(D)/\delta v_p$ in the negative direction with respect to the parameter t. Referring to this, it can also be seen that, by the effect of $\varepsilon_{\#n}(D)$, except for a phase component not depending on an angular frequency $\omega$, $E_{\#n}[D, t, \Delta D_{\#n}, \Delta L_{\#n}, \varepsilon_{\#n}(D)]$ is shifted by $v_0\tau_p\varepsilon_{\#n}(D)/\delta v_p$ in the negative direction with respect to the parameter t, relative to $\varepsilon_{\#n}(D, t)$.

Considering the above-described Magnitude of Effect 1 and the above-described Magnitude of Effect 2, Expression (13) is obtained by using a phase component $\varphi$ not depending on the angular frequency $\omega$.

[Math. 13]

$$E_{\#n}[D, t, \Delta D_{\#n}, \Delta L_{\#n}, \epsilon_{\#n}(D)] \cong \exp(j\phi)E_{\#n}(D, t) * \delta\left[t + \left[\frac{\tau_p v_0 \epsilon_{\#n}(D)}{\delta v_p} - 2\left(\frac{2\Delta L_{\#n} - \Delta D_{\#n}}{c}\right)\right]\right]$$

Expression (13)

The magnitudes of the terms in the delta function on the rightmost side of Expression (13) will be compared. Considering a measurement in a real environment, the approximation of Expression (14) can be used at many points of the core #n. Note that, when Expression (14) is not satisfied, a second exemplary embodiment or the like described below also is used.

[Math. 14]

$$\delta\left[t + \left[\frac{\tau_p v_0 \epsilon_{\#n}(D)}{\delta v_p} - 2\left(\frac{2\Delta L_{\#n} - \Delta D_{\#n}}{c}\right)\right]\right] \cong \delta\left(t + \frac{\tau_p v_0 \epsilon_{\#n}(D)}{\delta v_p}\right)$$

Expression (14)

Expression (13) can be transformed into Expression (15) by using Expression (14).

[Math. 15]

$$E_{\#n}[D, t, \Delta D_{\#n}, \Delta L_{\#n}, \epsilon_{\#n}(D)] \cong \exp(-j\phi)E_{\#n}(D, t) * \delta\left(t + \frac{\tau_p v_0 \epsilon_{\#n}(D)}{\delta v_p}\right)$$

Expression (15)

As can be seen from Expression (15), an effect resulting from the change of $\Delta D_{\#n}$ and $\Delta L_{\#n}$ can be ignored approximatively. When Expression (15) is used, a signal $I_{p, \#X}$ output by a photodiode at a timing when the test light is reflected by a reflection element of a certain branched optical fiber #X, the reflected light is backscattered by a scatterer in a section where the distance z from the incident end satisfies $D + \Delta D_{\#X} < z < D + \Delta D_{\#X} + \tau_p C/2$, and the backscattered light is reflected by the reflection element and returns to the incident end, is given by Equation (16).

[Math. 16]

$$I_{p,\#X}(D,t) = A\left[\left|\sum_n \left|e_{\#n}\left[D_{\#n,\#X}, -t\right]\right|^2 * \delta\left(t - \left(\tau_p + \frac{4L_{\#n}}{c} - \frac{\tau_p v_0 \epsilon_{\#n}(D_{\#n,\#X})}{\delta v_p}\right)\right)\right.\right.$$

$$+ \sum_n \sum_{m(\neq n)} \exp(j\theta_{\#n,\#m})\left[e_{\#n}(D_{\#n,\#X}, -t)\right.$$

$$\left. * \delta\left(t - \left(\tau_p + \frac{4L_{\#n}}{c} - \frac{\tau_p v_0 \epsilon_{\#n}(D_{\#n,\#X})}{\delta v_p}\right)\right)\right]$$

$$\left.\left.\cdot\left[\overline{e_{\#m}(D_{\#m,\#X}, -t)} * \delta\left(t - \left(\tau_p + \frac{4L_{\#m}}{c} - \frac{\tau_p v_0 \epsilon_{\#m}(D_{\#m,\#X})}{\delta v_p}\right)\right)\right]\right]\right] * h(t)$$

Equation (16)

In Equation (16), a portion depending on n and m but not affecting the following discussion, is expressed by newly using a real number $\theta_{\#n,\#m}$ to simplify the mathematical expression.

In the procedure S 113, a correlation between a scattered light intensity $I_{ref}(D, t)$ measured at the reference time and a scattered light intensity $I_{p,\#X}(D, t)$ measured at the monitoring time is calculated to calculate, at the monitoring time, a dynamic strain $\varepsilon_{\#X}(D)$ applied to a section where the distance z from the incident end of the branched optical fiber #X at the reference time satisfies $D < z < D + \tau_p C/2$. Here, a correlation function CORR used in the correlation calculation is defined by Equation (17). R is a real number representing a shift amount.
[Math. 17]

$$\mathrm{CORR}_{\#X}(f(t), g(t), D, R) = \int_{\frac{4L_{\#X}-2D}{c}}^{\frac{4L_{\#X}-2D}{c}+\tau_p} [f(-t+R)g(t)]dt$$

Equation (17)

L#x can be calculated, for example, by focusing on a strong signal peak generated when test light reflected by the reflection element of each core returns to the incident end. A correlation value C#x(D, R) between the scattered light intensity $I_{ref}(D, t)$ at the reference time and the scattered light intensity $I_{p,\#X}(D, t)$ at the monitoring time is calculated according to Equation (18). FT represents a Fourier transform and IFT represents an inverse Fourier transform.
[Math. 18]

$$C_{\#X}(D, R) = \mathrm{CORR}_{\#X}\left(\mathrm{IFT}\left[\frac{\mathrm{FT}[I_{ref}(D,t)]}{\mathrm{FT}[h(t)]}\right], \mathrm{IFT}\left[\frac{\mathrm{FT}[I_{p,\#X}(D,t)]}{\mathrm{FT}[h(t)]}\right], D, R\right)$$

Equation (18)

An integral of a term containing a product of complex amplitudes of scattered light scattered from cores different from each other is negligibly small, and further, an integral of a term containing a product of complex amplitudes of scattered light scattered from completely different sections in the same core is negligibly small, so that Equation (18) can be transformed into Equation (19).
[Math. 19]

$$C_{\#X}(D,R) = A^2 \int_{\frac{4L_{\#X}-2D}{c}}^{\frac{4L_{\#X}-2D}{c}+\tau_p} |e_{\#X}(D,-t+R)|^2 \Bigg[ |e_{\#X}(D,-t)|^2$$

$$* \, \delta\left(t - \left(\tau_p + \frac{4L_{\#X}}{c} - \frac{\tau_p v_0 \epsilon_{\#X}(D)}{\delta v_p}\right)\right)\Bigg] dt$$

Equation (19)

Consequently, given that $R_{max}$ is a value of a shift amount R at which the correlation value C#x(D, R) is maximum, $R_{max}$ satisfies Equation (E3).
[Math. E3]

$$R_{max} = \tau_p + \frac{4L_{\#X}}{c} - \frac{\tau_p v_0 \epsilon_{\#X}(D)}{\delta v_p}$$

Equation (E3)

Thus, the dynamic strain amount $\epsilon_{\#X}(D)$ can be calculated by Equation (20).
[Math. 20]

$$\epsilon_{\#X}(D) = \frac{\delta v_p}{\tau_p v_0}\left(\tau_p + \frac{4L_{\#X}}{c} - R_{max}\right)$$

Equation (20)

If the above-described calculation is repeated at each monitoring time, a strain amount change $\epsilon_{\#X}(D)$ at each monitoring time with respect to the reference time can be calculated, and it is possible to measure a distribution of a vibration pattern as a temporal change in strain amount in each core.

To summarize the procedures, in the procedure S111, chirped pulsed light having a complex amplitude according to Equation (1) is used at a reference time to save the signal $I_{ref}$ of scattered light according to Equation (3) in the storage unit 10. In the procedure S112, chirped pulsed light having a complex amplitude according to Equation (4) is used at a monitoring time to save the signal $I_p$ of scattered light according to Equation (16) in the storage unit 10. In the procedure S113, $I_{ref}$ and $I_p$ saved in the storage unit 10 are used to determine a shift amount at which the correlation values defined in Equation (17) and Equation (18) are maximized to calculate a change in strain amount at the monitoring time with respect to the reference time by using the determined shift amount. Fig. 2 described above illustrates an abstracted outline of these procedures.

Note that, in the procedures described above, Equation (17) and Equation (18) are used to calculate a correlation between a signal of normal scattered light detectable without the reflection element 6 at the reference time (hereinafter, referred to as a normal signal) and a signal obtained by detecting, at each monitoring time, backscattered light that is generated in accordance with the propagation of the reflected test light returning in the direction of the incident end after reflecting the test light using the reflection element 6, that is propagated in the direction of the reflection element 6, that is further reflected by the reflection element 6 and that is propagated in the direction of the incident end (hereinafter, referred to as a ghost signal). However, a correlation between a ghost signal at the reference time and a normal signal at each monitoring time may be calculated.

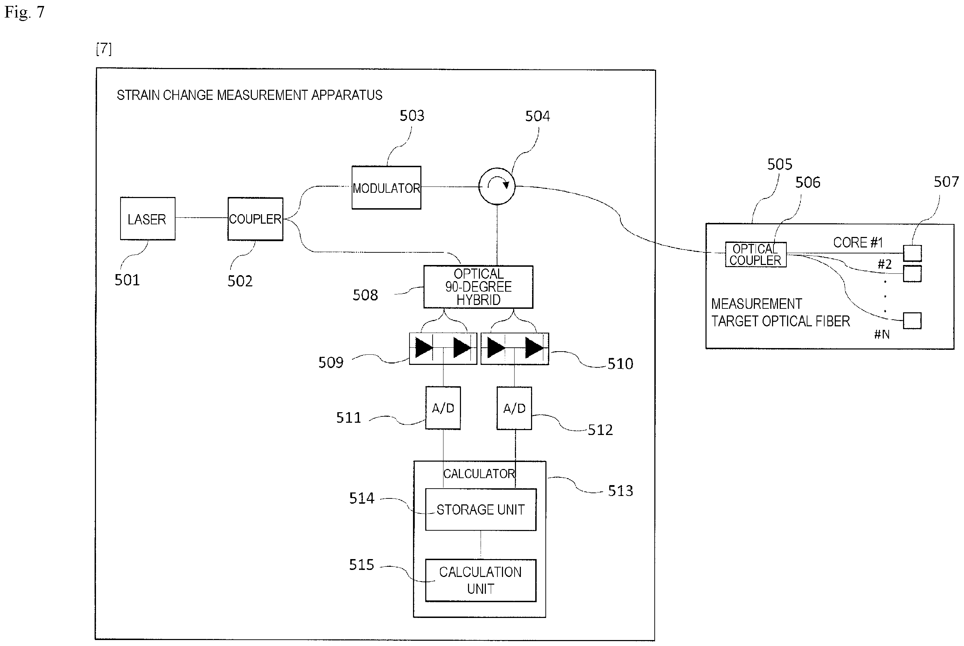

Although a configuration of the apparatus in Fig. 1 is based on a direct wave detection configuration, the apparatus can also be implemented with a coherent wave detection configuration as illustrated in Fig. 7. When the coherent wave detection configuration is used, the configuration of the apparatus is more complicated, but advantageously, an SN ratio of the scattered light detection can be improved, and measurement can be performed over a longer distance.

Continuous light is emitted by a laser 501 and split into two light beams by a coupler 502. One of the light beams is used as probe light and the other is used as reference light. A modulator 503 creates chirped pulsed light from the probe light. The created chirped pulsed light is incident on a measurement target optical fiber 505 via a circulator 504. The measurement target optical fiber 505 is branched by an optical coupler 506, and thus, there are N branched optical fibers including a branched optical fiber #1 to a branched optical fiber #N. A reflection element 507 that reflects the created chirped pulsed light is provided at a far end of each branched optical fiber. Scattered light backscattered by Rayleigh scattering from the measurement target optical fiber 505 and the reference light are incident on an optical 90-degree hybrid 508. Among the four output beams from the optical 90-degree hybrid, two output beams corresponding to in-phase components are incident on a balanced detector 509, and two output beams corresponding to quadrature components are incident on a balanced detector 510. In order to be converted into a digital signal, the in-phase component output beams obtained as a result of photoelectric conversion are incident on an AD conversion board 511, and the quadrature component output beams obtained as a result of photoelectric conversion are incident on an AD conversion board 512. The digitized signals are saved in a storage unit 514 of a calculator 513. By calculating the sum of the squares of the in-phase components and the squares of the quadrature components saved in the storage unit 514, the scattered light intensity described in Equation (3) and Equation (16) can be calculated. The calculation is performed by a calculation unit 515 using the data saved in the storage unit 514.

Note that, in both of the configurations of Figs. 1 and 7, FT[h(t)] in Equation (18) can be approximated to 1 by increasing a band of a photodiode sufficiently.

Second Exemplary Embodiment

In the first exemplary embodiment, a vibration pattern is tracked by measuring the strain amount change at each monitoring time with respect to the reference time. However, when the strain change from the reference time to the monitoring time increases, it is not possible to use an approximation of a waveform in which $|E_{\#n}[D, t, \Delta D_{\#n}, \Delta L_{\#n}, \varepsilon_{\#n}(D)]|$ is shifted by an amount proportional to $\varepsilon_{\#n}(D)$ in the direction of the parameter t with respect to $|E_{\#n}(D, t)|$, as obtained by calculating the absolute value of Expression (15). In order to address such a problem, the present exemplary embodiment describes a method of using, as a reference for each monitoring time, a waveform of scattered light obtained at a previous monitoring time.

Firstly, $t_k$ ($k \in N$) denotes monitoring times. The monitoring times are numbered so as to satisfy $t_{(k-1)} < t_k < t_{(k+1)}$ for all elements of k.

In the first exemplary embodiment, only the reference time uses a pulse having the chirp inverted with respect to another monitoring time. However, in the present exemplary embodiment, Equation (1) is used given that the number k is an odd number, and Equation (4) is used given that the number k is an even number. That is, pulses with inverted chirps are alternately incident. $I_{k, \#X}(D, t)$ denotes scattered light acquired at a monitoring time $t_k$.

The strain amount change $\varepsilon_{\#X}(D, k)$ from time $t_{(k-1)}$ to time $t_k$ is calculated according to the following procedure.

- Given that k is an even number

[0081] Similarly to the first exemplary embodiment, a correlation value $C_{k, \#X}$ at the time $t_k$ is calculated by Equation (21).
[Math. 21]

$$C_{k,\#X}(D,R) = \text{CORR}_{\#X}\left(\text{IFT}\left[\frac{\text{FT}\left[I_{(k-1),\#X}(D,t)\right]}{\text{FT}[h(t)]}\right], \text{IFT}\left[\frac{\text{FT}\left[I_{k,\#X}(D,t)\right]}{\text{FT}[h(t)]}\right], D, R\right)$$

$$\text{Equation (21)}$$

Given that a value of R providing a maximum value for the correlation value of Equation (21) is calculated and denoted as $R_{max}$, $R_{max}$ satisfies Equation (22).
[Math. 22]

$$R_{max} = \tau_p + \frac{4L_{\#X}}{c} - \frac{\tau_p v_0 \epsilon_{\#X}(D,k)}{\delta v_p}$$

$$\text{Equation (22)}$$

Consequently, the strain amount change $\varepsilon_{\#X}(D, k)$ can be calculated by Equation (23).
[Math. 23]

$$\epsilon_{\#X}(D,k) = \frac{\delta v_p}{\tau_p v_0}\left(\tau_p + \frac{4L_{\#X}}{c} - R_{max}\right)$$

$$\text{Equation (23)}$$

- Given that k is an odd number

[0084] Similarly to the state where k is an even number, the correlation value is calculate by Equation (21) and a value of R providing a maximum value for the correlation value is calculated and used as $R_{max}$. $R_{max}$ satisfies Equation (24). [Math. 24]

$$R_{max} = \tau_p + \frac{4L_{\#X}}{c} + \frac{\tau_p v_0 \epsilon_{\#X}(D,k)}{\delta v_p}$$

$$\text{Equation (24)}$$

Consequently, the strain amount change $\epsilon_{\#X}(D, k)$ can be calculated by Equation (25). [Math. 25]

$$\epsilon_{\#X}(D,k) = -\frac{\delta v_p}{\tau_p v_0}\left(\tau_p + \frac{4L_{\#X}}{c} - R_{max}\right)$$

$$\text{Equation (25)}$$

Note that, in the procedures described above, Equation (17) and Equation (18) are used to calculate a correlation between a signal of normal scattered light detectable without a reflection element at the monitoring time $t_{(k-1)}$ (hereinafter, referred to as a normal signal), and a signal detected, at the monitoring time $t_k$, backscattered light that is generated in accordance with the propagation of the reflected test light returning in the direction of the incident end after reflecting the test light using a reflection element, that is propagated in the direction of the reflection element, that is further reflected by the reflection element and that is propagated in the direction of the incident end (hereinafter, referred to as a ghost signal). However, a correlation between a ghost signal at the monitoring time $t_{(k-1)}$ and a normal signal at the monitoring time $t_k$ may be calculated.

In the experimental configuration, only a method of modulating the probe light changes, and thus, it is possible to use the configurations of Figs. 1 and 7 as is.

Industrial Applicability

The present disclosure can be applied to information and communication industries.

Reference Signs List

1, 501: Laser
2, 503: Modulator
3, 504: Circulator
4, 505: Measurement target optical fiber
5, 506: Optical coupler
6, 507: Reflection element
7: Photodiode
8: AD board
9, 513: Calculator
10, 514: Storage unit
11, 515: Calculation unit
502: Coupler

508: Optical 90-degree hybrid
509, 510: Balanced detector
511, 512: AD conversion board

**Claims**

1. A strain change measurement method comprising:

   by a strain change measurement apparatus, inputting first chirped pulsed light having a chirp having a frequency changing linearly with time to a measurement target optical fiber (4) branched by a coupler (5) to acquire a signal of first scattered light regarding the first chirped pulsed light;
   by the strain change measurement apparatus, inputting second chirped pulsed light having a chirp obtained by time axial inversion with respect to the first chirped pulsed light to the measurement target optical fiber (4) to acquire a signal of second scattered light regarding the second chirped pulsed light; and
   by the strain change measurement apparatus, determining a shift amount allowing for maximization of a correlation between a waveform obtained by inverting the signal of the first scattered light around the time axis and further shifting and a waveform of the signal of the second scattered light, and using the shift amount to calculate a change in a strain amount in the measurement target optical fiber.

2. The strain change measurement method according to claim 1, wherein the measurement target optical fiber (4) includes a branched optical fiber being a portion branched by the coupler (5) and a reflection element (6) provided at an end of the branched optical fiber,

   the first scattered light is light scattered in the measurement target optical fiber (4) before reaching the reflection element (6), hereinafter, referred to as a normal signal,
   the second scattered light includes a signal obtained by detecting backscattered light that is generated in accordance with a propagation of the second chirped pulsed light returning in a direction of an incident end after reflecting the second chirped pulsed light using the reflection element (6), that is propagated in a direction of the reflection element (6), that is further reflected by the reflection element (6) and that is propagated in the direction of the incident end, hereinafter, referred to as a ghost signal, and
   the shift amount is a shift amount that maximizes a correlation value between a time waveform of the ghost signal and a time waveform obtained by temporally inverting and shifting the normal signal, calculated in a range of a predetermined section determined by the chirp pulse.

3. The strain change measurement method according to claim 1, wherein the measurement target optical fiber (4) includes a branched optical fiber being a portion branched by the coupler (5) and a reflection element (6) provided at an end of the branched optical fiber,

   the first scattered light includes a signal obtained by detecting backscattered light that is generated in accordance with a propagation of the second chirped pulsed light returning in a direction of an incident end after reflecting the second chirped pulsed light using the reflection element (6), that is propagated in a direction of the reflection element (6), that is further reflected by the reflection element (6) and that is propagated in the direction of the incident end, hereinafter, referred to as a ghost signal,
   the second scattered light is light scattered in the measurement target optical fiber (4) before reaching the reflection element (6), hereinafter, referred to as a normal signal, and
   the shift amount is a shift amount that maximizes a correlation value between a time waveform of the ghost signal and a time waveform obtained by temporally inverting and shifting the normal signal, calculated in a range of a predetermined section determined by the chirp pulse.

4. The strain change measurement method according to any one of claims 1 to 3, further comprising:

   acquiring the signal of the first scattered light in advance;
   acquiring the signal of the second scattered light at individual monitoring times for tracking a vibration pattern; and
   calculating a strain change of the signal of the second scattered light at the individual monitoring times with respect to the signal of the first scattered light acquired in advance and acquiring a temporal change in strain based on the calculated strain change to measure a distribution of a vibration pattern of the measurement target optical fiber.

17

**5.** The strain change measurement method according to any one of claims 1 to 3, further comprising:

alternately inputting the first chirped pulsed light and the second chirped pulsed light to the measurement target optical fiber (4) at individual monitoring times for tracking a vibration pattern to acquire the signal of the first scattered light and the signal of the second scattered light; and

calculating a strain change of the signal of the second scattered light at a monitoring time with respect to the signal of the first scattered light acquired at a time different from the monitoring time and acquiring a temporal change in strain based on the calculated strain change to measure a distribution of a vibration pattern of the measurement target optical fiber.

**6.** A strain change measurement apparatus configured:

to input, at a reference time, first chirped pulsed light having a chirp having a frequency changing linearly with time to a measurement target optical fiber (4) branched by a coupler (5) to acquire a signal of first scattered light regarding the first chirped pulsed light;

to input, at individual monitoring times, second chirped pulsed light having a chirp obtained by time axal inversion with respect to the first chirped pulsed light to the measurement target optical fiber (4) to acquire a signal of second scattered light regarding the second chirped pulsed light; and

to determine a shift amount allowing for maximization of a correlation between a waveform obtained by inverting the signal of the first scattered light around the time axis and further shifting and a waveform of the signal of the second scattered light, and use the shift amount to calculate a change in strain amount in the measurement target optical fiber (4) from the reference time to each of the monitoring times.

**Patentansprüche**

**1.** Dehnungsänderungsmessverfahren, aufweisend:

Einspeisen, mittels einer Dehnungsänderungsmessvorrichtung, von erstem gechirptem gepulstem Licht mit einem Chirp, dessen Frequenz sich linear mit der Zeit ändert, in eine optische Messobjektfaser (4), die durch einen Koppler (5) verzweigt ist, um ein Signal von erstem Streulicht bezüglich des ersten gechirpten gepulsten Lichts zu erfassen;

Einspeisen, mittels der Dehnungsänderungsmessvorrichtung, von zweitem gechirptem gepulstem Licht mit einem Chirp, der durch zeitlich axiale Inversion in Bezug auf das erste gechirpte gepulste Licht erhalten wird, in die optische Messobjektfaser (4), um ein Signal von zweitem Streulicht bezüglich des zweiten gechirpten gepulsten Lichts zu erfassen; und

Ermitteln, mittels der Dehnungsänderungsmessvorrichtung, eines Verschiebungsbetrags, der die Maximierung einer Korrelation zwischen einer Wellenform, die durch Invertieren des Signals des ersten Streulichts bezüglich der Zeitachse und weiteres Verschieben erhalten wird, und einer Wellenform des Signals des zweiten Streulichts ermöglicht, und Verwenden des Verschiebungsbetrags zum Berechnen einer Änderung eines Dehnungsbetrags in der optischen Messobjektfaser.

**2.** Dehnungsänderungsmessverfahren nach Anspruch 1, wobei die optische Messobjektfaser (4) eine verzweigte optische Faser, die ein durch den Koppler (5) verzweigter Abschnitt ist, und ein Reflexionselement (6), das an einem Ende der verzweigten optischen Faser vorgesehen ist, aufweist,

das erste Streulicht Licht ist, das in der optischen Messobjektfaser (4) gestreut wird, bevor es das Reflexionselement (6) erreicht, im Folgenden als normales Signal bezeichnet,

das zweite Streulicht ein Signal aufweist, das durch Erfassen von rückgestreutem Licht erhalten wird, das entsprechend einer Ausbreitung des zweiten gechirpten gepulsten Lichts, das in eine Richtung eines einfallenden Endes zurückkehrt, nachdem das zweite gechirpte gepulste Licht an dem Reflexionselement (6) reflektiert wurde, erzeugt wird, das sich in eine Richtung des Reflexionselements (6) ausbreitet, das durch das Reflexionselement (6) erneut reflektiert wird und das sich in die Richtung des einfallenden Endes ausbreitet, im Folgenden als Geistersignal bezeichnet, und

der Verschiebungsbetrag ein Verschiebungsbetrag ist, der einen Korrelationswert zwischen einer zeitlichen Wellenform des Geistersignals und einer zeitlichen Wellenform, die durch zeitliche Invertierung und Verschiebung des normalen Signals erhalten wird, berechnet in einem Bereich eines vorbestimmten Abschnitts, der durch den Chirp-Impuls bestimmt wird, maximiert.

**3.** Dehnungsänderungsmessverfahren nach Anspruch 1, wobei die optische Messobjektfaser (4) eine verzweigte optische Faser, die ein durch den Koppler (5) verzweigter Abschnitt ist, und ein Reflexionselement (6), das an einem Ende der verzweigten optischen Faser vorgesehen ist, aufweist,

das erste Streulicht ein Signal aufweist, das durch Erfassen von rückgestreutem Licht erhalten wird, das entsprechend einer Ausbreitung des zweiten gechirpten gepulsten Lichts, das in eine Richtung eines einfallenden Endes zurückkehrt, nachdem das zweite gechirpte gepulste Licht an dem Reflexionselement (6) reflektiert wurde, erzeugt wird, das sich in eine Richtung des Reflexionselements (6) ausbreitet, das durch das Reflexionselement (6) erneut reflektiert wird und das sich in die Richtung des einfallenden Endes ausbreitet, im Folgenden als Geistersignal bezeichnet
das zweite Streulicht Licht ist, das in der optischen Messobjektfaser (4) gestreut wird, bevor es das Reflexionselement (6) erreicht, im Folgenden als normales Signal bezeichnet,
der Verschiebungsbetrag ein Verschiebungsbetrag ist, der einen Korrelationswert zwischen einer zeitlichen Wellenform des Geistersignals und einer zeitlichen Wellenform, die durch zeitliche Invertierung und Verschiebung des normalen Signals erhalten wird, berechnet in einem Bereich eines vorbestimmten Abschnitts, der durch den Chirp-Impuls bestimmt wird, maximiert.

**4.** Dehnungsänderungsmessverfahren nach einem der Ansprüche 1 bis 3, ferner aufweisend:

Erfassen des Signals des ersten Streulichts im Voraus;
Erfassen des Signals des zweiten Streulichts zu einzelnen Überwachungszeiten zum Verfolgen eines Vibrationsmusters; und
Berechnen einer Dehnungsänderung des Signals des zweiten Streulichts zu den einzelnen Überwachungszeiten in Bezug auf das Signal des ersten Streulichts, das im Voraus erfasst wird, und Erfassen einer zeitlichen Dehnungsänderung auf der Grundlage der berechneten Dehnungsänderung, um eine Verteilung eines Vibrationsmusters der optischen Messobjektfaser zu messen.

**5.** Dehnungsänderungsmessverfahren nach einem der Ansprüche 1 bis 3, ferner aufweisend:

abwechselndes Einspeisen des ersten gechirpten gepulsten Lichts und des zweiten gechirpten gepulsten Lichts in die optische Messobjektfaser (4) zu einzelnen Überwachungszeiten zum Verfolgen eines Vibrationsmusters, um das Signal des ersten Streulichts und das Signal des zweiten Streulichts zu erfassen; und
Berechnen einer Dehnungsänderung des Signals des zweiten Streulichts zu einem Überwachungszeitpunkt in Bezug auf das Signal des ersten Streulichts, das zu einem von dem Überwachungszeitpunkt verschiedenen Zeitpunkt erfasst wurde, und Erfassen einer zeitlichen Dehnungsänderung auf der Grundlage der berechneten Dehnungsänderung, um eine Verteilung eines Vibrationsmusters der optischen Messobjektfaser zu messen.

**6.** Dehnungsänderungsmessvorrichtung, dazu ausgebildet:

zu einem Referenzzeitpunkt erstes gechirptes gepulstes Licht mit einem Chirp, dessen Frequenz sich linear mit der Zeit ändert, in eine optische Messobjektfaser (4), die durch einen Koppler (5) verzweigt ist, einzuspeisen, um ein Signal des ersten gestreuten Lichts bezüglich des ersten gechirpten gepulsten Lichts zu erfassen;
zu einzelnen Überwachungszeiten zweites gechirptes gepulstes Licht mit einem Chirp, der durch zeitlich axiale Inversion in Bezug auf das erste gechirpte gepulste Licht erhalten wird, in die optische Messobjektfaser (4), einzuspeisen, um ein Signal von zweitem Streulicht bezüglich des zweiten gechirpten gepulsten Lichts zu erfassen; und
einen Verschiebungsbetrag zu ermitteln, der die Maximierung einer Korrelation zwischen einer Wellenform, die durch Invertieren des Signals des ersten Streulichts bezüglich der Zeitachse und weiteres Verschieben erhalten wird, und einer Wellenform des Signals des zweiten Streulichts ermöglicht, und den Verschiebungsbetrag zu verwenden, um eine Änderung eines Dehnungsbetrags in der optischen Messobjektfaser von der Referenzzeit zu jeder der Überwachungszeiten zu berechnen.

**Revendications**

**1.** Procédé de mesure de variation de déformation comprenant :

par un appareil de mesure de variation de déformation, l'entrée d'une première lumière pulsée à compression d'impulsions présentant une compression d'impulsions présentant une fréquence variant linéairement avec le temps dans une fibre optique cible de mesure (4) ramifiée par un coupleur (5) pour acquérir un signal de première lumière diffusée concernant la première lumière pulsée à compression d'impulsions ;

par l'appareil de mesure de variation de déformation, l'entrée d'une deuxième lumière pulsée à compression d'impulsions présentant une compression d'impulsions obtenue par inversion axiale temporelle par rapport à la première lumière pulsée à compression d'impulsions dans la fibre optique cible de mesure (4) pour acquérir un signal de deuxième lumière diffusée concernant la deuxième lumière pulsée à compression d'impulsions ; et

par l'appareil de mesure de variation de déformation, la détermination d'une quantité de décalage permettant la maximisation d'une corrélation entre une forme d'onde obtenue par inversion du signal de la première lumière diffusée autour de l'axe temporel et en outre décalage et une forme d'onde du signal de la deuxième lumière diffusée, et l'utilisation de la quantité de décalage pour calculer une variation d'une quantité de déformation dans la fibre optique cible de mesure.

2. Procédé de mesure de variation de déformation selon la revendication 1, dans lequel la fibre optique cible de mesure (4) comporte une fibre optique ramifiée qui est une partie ramifiée par le coupleur (5) et un élément de réflexion (6) prévu au niveau d'une extrémité de la fibre optique ramifiée,

la première lumière diffusée est une lumière diffusée dans la fibre optique cible de mesure (4) avant d'atteindre l'élément de réflexion (6), ci-après désigné par signal normal,

la deuxième lumière diffusée comporte un signal obtenu par détection d'une lumière rétrodiffusée qui est générée en fonction d'une propagation de la deuxième lumière pulsée à compression d'impulsions revenant dans une direction d'une extrémité incidente après réflexion de la deuxième lumière pulsée à compression d'impulsions au moyen de l'élément de réflexion (6), qui est propagée dans une direction de l'élément de réflexion (6), qui est en outre réfléchie par l'élément de réflexion (6) et qui est propagée dans la direction de l'extrémité incidente, ci-après désigné par signal fantôme, et

la quantité de décalage est une quantité de décalage qui maximise une valeur de corrélation entre une forme d'onde temporelle du signal fantôme et une forme d'onde temporelle obtenue par inversion temporaire et décalage du signal normal, calculée dans une plage d'une section prédéterminée déterminée par l'impulsion comprimée.

3. Procédé de mesure de variation de déformation selon la revendication 1, dans lequel la fibre optique cible de mesure (4) comporte une fibre optique ramifiée qui est une partie ramifiée par le coupleur (5) et un élément de réflexion (6) prévu au niveau d'une extrémité de la fibre optique ramifiée,

la première lumière diffusée comporte un signal obtenu par détection de la lumière rétrodiffusée qui est générée en fonction d'une propagation de la deuxième lumière pulsée à compression d'impulsions revenant dans une direction d'une extrémité incidente après réflexion de la deuxième lumière pulsée à compression d'impulsions au moyen de l'élément de réflexion (6), qui est propagée dans une direction de l'élément de réflexion (6), qui est en outre réfléchie par l'élément de réflexion (6) et qui est propagée dans la direction de l'extrémité incidente, ci-après désigné par signal fantôme,

la deuxième lumière diffusée est la lumière diffusée dans la fibre optique cible de mesure (4) avant d'atteindre l'élément de réflexion (6), ci-après désigné par signal normal, et

la quantité de décalage est une quantité de décalage qui maximise une valeur de corrélation entre une forme d'onde temporelle du signal fantôme et une forme d'onde temporelle obtenue par inversion temporaire et décalage du signal normal, calculée dans une plage d'une section prédéterminée déterminée par l'impulsion comprimée.

4. Procédé de mesure de variation de déformation selon l'une quelconque des revendications 1 à 3, comprenant en outre :

l'acquisition du signal de la première lumière diffusée à l'avance ;
l'acquisition du signal de la deuxième lumière diffusée à des moments de surveillance individuels pour suivre un motif de vibration ; et
le calcul d'une variation de déformation du signal de la deuxième lumière diffusée à des moments de surveillance individuels par rapport au signal de la première lumière diffusée acquise à l'avance et l'acquisition d'une variation de déformation temporaire sur la base de la variation de déformation calculée pour mesurer une distribution d'un motif de vibration de la fibre optique cible de mesure.

**5.** Procédé de mesure de variation de déformation selon l'une quelconque des revendications 1 à 3, comprenant en outre :

alternativement l'entrée de la première lumière pulsée à compression d'impulsions et de la deuxième lumière pulsée à compression d'impulsions dans la fibre optique cible de mesure (4) à des moments de surveillance individuels pour suivre un motif de vibration pour acquérir le signal de la première lumière diffusée et le signal de la deuxième lumière diffusée ; et

le calcul d'une variation de déformation du signal de la deuxième lumière diffusée à un moment de surveillance par rapport au signal de la première lumière diffusée acquise à un moment différent du moment de surveillance et l'acquisition d'une variation de déformation temporaire sur la base de la variation de déformation calculée pour mesurer une distribution d'un motif de vibration de la fibre optique cible de mesure.

**6.** Appareil de mesure de variation de déformation configuré :

pour entrer, à un moment de référence, une première lumière pulsée à compression d'impulsions présentant une compression d'impulsions présentant une fréquence variant linéairement avec le temps dans une fibre optique cible de mesure (4) ramifiée par un coupleur (5) pour acquérir un signal de première lumière diffusée concernant la première lumière pulsée à compression d'impulsions ;

pour entrer, à des moments de surveillance individuels, une deuxième lumière pulsée à compression d'impulsions présentant une compression d'impulsions obtenue par inversion axiale temporelle par rapport à la première lumière pulsée à compression d'impulsions dans la fibre optique cible de mesure (4) pour acquérir un signal de deuxième lumière diffusée concernant la deuxième lumière pulsée à compression d'impulsions ; et

pour déterminer une quantité de décalage permettant la maximisation d'une corrélation entre une forme d'onde obtenue par inversion du signal de la première lumière diffusée autour de l'axe temporel et en outre décalage et une forme d'onde du signal de la deuxième lumière diffusée, et utiliser la quantité de décalage pour calculer une variation de quantité de déformation dans la fibre optique cible de mesure (4) à partir du moment de référence vers chacun des moments de surveillance.

Fig. 1

Fig. 2

[2]

S111

PROCEDURE 1: INPUT, AT REFERENCE TIME, CHIRPED PULSED LIGHT HAVING CHIRP WITH INSTANTANEOUS FREQUENCY CHANGING LINEARLY WITH TIME TO MEASUREMENT TARGET OPTICAL FIBER AND ACQUIRE SIGNAL $I_{ref}$ OF SCATTEERED LIGHT

S112

PROCEDURE 2: INPUT, AT MONITORING TIME, CHIRPED PULSED LIGHT OBTAINED BY INVERTING CHIRP OF PROCEDURE 1 TO MEASUREMENT TARGET OPTICAL FIBER AND ACQUIRE SIGNAL $I_p$ OF SCATTERED LIGHT

REPEAT PROCEDURE 2 AT EACH MONITORING TIME

S113

PROCEDURE 3: CALCULATE SHIFT AMOUNT OF INVERTED $I_{ref}$ SO THAT CORRELATION BETWEEN WAVEFORM OBTAINED BY INVERTING $I_{ref}$ AROUND TIME AXIS AND FURTHER SHIFTING AND WAVEFORM OF $I_p$ ACQUIRED AT EACH MONITORING TIME IS MAXIMIZED AND CALCULATE STRAIN AMOUNT CHANGE FROM REFERENCE TIME TO EACH MONITORING TIME BY USING CALCULATED SHIFT AMOUNT.

Fig. 3

[3]

FREQUENCY $v$

$v_0$

$v_0 - \delta v_p$

0

$\tau_p$

TIME $t$

Fig. 4

[4]

FREQUENCY $v$

$v_0$

$v_0 - \delta v_p$

$0$

$\tau_p$

TIME $t$

Fig. 5

[5]

Fig. 6

[6]

Fig. 7

[7]

STRAIN CHANGE MEASUREMENT APPARATUS

LASER 501 — COUPLER 502 — MODULATOR 503 — 504

OPTICAL 90-DEGREE HYBRID 508

509 — 510

A/D 511 — A/D 512

CALCULATOR 513

STORAGE UNIT 514

CALCULATION UNIT 515

OPTICAL COUPLER 505 506

CORE #1 507
#2
#N

MEASUREMENT TARGET OPTICAL FIBER

EP 4 170 281 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2016142618 A, Shingo Ohno, Tatsuya Okamoto, Kunihiro Toge, Tetsuya Manabe

- DE 102018105905 A1

### Non-patent literature cited in the description

- **ALI. MASOUDI ; T. P. NEWSON.** Contributed Review: Distributed optical fibre dynamic strain sensing. *Review of Scientific Instruments,* 2016, vol. 87, 011501
- Phase-sensitive OTDR system based on digital coherent detection. **Z. PAN ; K. LIANG ; Q. YE ; H. CAI ; R. QU ; Z. FANG.** Optical Sensors and Biophotonics. Optical Society of America, 2011, vol. 8311
- **DA-PENG ZHOU ; ZENGGUANG QIN ; WENHAI LI ; LIANG CHEN ; XIAOYI BAO.** Distributed vibration sensing with time-resolved optical frequency-domain reflectometry. *Opt. Express,* 2012, vol. 20, 13138-13145
- **DA-PENG ZHOU ; LIANG CHEN ; XIAOYI BAO.** Distributed dynamic strain measurement using optical frequency-domain reflectometry. *Appl. Opt.,* 2016, vol. 55, 6735-6739

- **YAHEI KOYAMADA ; MUTSUMI IMAHAMA ; KENYA KUBOTA ; KAZUO HOGARI.** Fiber-Optic Distributed Strain and Temperature Sensing With Very High Measurand Resolution Over Long Range Using Coherent OTDR. *J. Lightwave Technol.,* 2009, vol. 27, 1142-1146
- **SASCHA LIEHR ; SVEN MUNZENBERGER ; KATERINA KREBBER.** Wavelength-scanning coherent OTDR for dynamic high strain resolution sensing. *Opt. Express,* 2018, vol. 26, 10573-10588
- **LIHI SHILOH ; AVISHAY EYAL.** Distributed acoustic and vibration sensing via optical fractional Fourier transform reflectometry. *Opt. Express,* 2015, vol. 23, 4296-4306